# EUROPEAN PATENT SPECIFICATION

(11) **EP 3 780 218 B1**
(45) Date of publication and mention of the grant of the patent: **28.05.2025**
(21) Application number: 20795261.5
(22) Date of filing: 20.04.2020
(51) Int. Cl.: H01M 10/04, H01M 10/654, H01M 10/653, H01M 10/613, H01M 10/0585

(54) **ELECTRODE ASSEMBLY**
ELEKTRODENANORDNUNG
ENSEMBLE ÉLECTRODE

(30) Priority: 22.04.2019 KR 20190046622
(43) Date of publication of application: 17.02.2021
(73) Proprietor: LG Energy Solution, Ltd., Seoul 07335 (KR)
(72) Inventor: SHIM, Hyun Seok, Daejeon 34122 (KR)
(74) Representative: Plasseraud IP
(86) International application number: PCT/KR2020/005219
(87) International publication number: WO 2020/218794

(56) References cited:
- WO-A1-2007/094642
- JP-A- 2010 171 030
- KR-A- 20100 073 753
- KR-A- 20130 128 273
- KR-A- 20160 086 194
- KR-A- 20180 020 599
- US-A1- 2012 208 070
- US-A1- 2013 224 555
- US-A1- 2016 043 370
- US-A1- 2017 365 829

## Description

### CROSS-REFERENCE TO RELATED APPLICATION

The present application claims the benefit of the priority of Korean Patent Application No. 10-2019-0046622, filed on April 22, 2019.

### TECHNICAL FIELD

The present invention relates to an electrode assembly in which negative electrodes, separators, and positive electrodes are repeatedly stacked, and more particularly, to an electrode assembly in which a heat transfer plate that disperses heat is additionally stacked to reduce a temperature deviation therein.

### BACKGROUND ART

The demands for high-efficiency secondary batteries are rapidly increasing in the mobile device and electric vehicle fields. Among such the secondary batteries, a lithium secondary battery having high energy density, maintaining a relatively high voltage, and having a low self-discharge rate is commercially widely used, and research and development for improving performance is actively being conducted.

The secondary battery has a structure in which an electrode assembly and an electrolyte are embedded in a case such as a can or a pouch. The electrode assembly has a structure in which positive electrodes, separators, and negative electrodes are repeatedly stacked. In general, the electrode assembly may be classified into a winding type electrode assembly in which the positive electrodes, the separators, and the negative electrodes, which are in the stacked state, are rolled to be embedded in the case and a stack type (stacked) electrode assembly in which the positive electrodes, the separators, and the negative electrodes, each of which is cut to a predetermined size, are stacked.

Since the winding type electrode assembly has a spirally wound structure, the winding type electrode assembly is suitable for being mounted on a cylindrical battery, but is disadvantageous in space utilization for a prismatic or pouch type battery. On the other hand, since the stack type electrode assembly is adjusted in size when the electrode and the separator are cut, the prismatic shape fitted with the case is easily obtained, but a manufacturing process is relatively complicated, and the stack type electrode assembly is relatively vulnerable to an external impact.

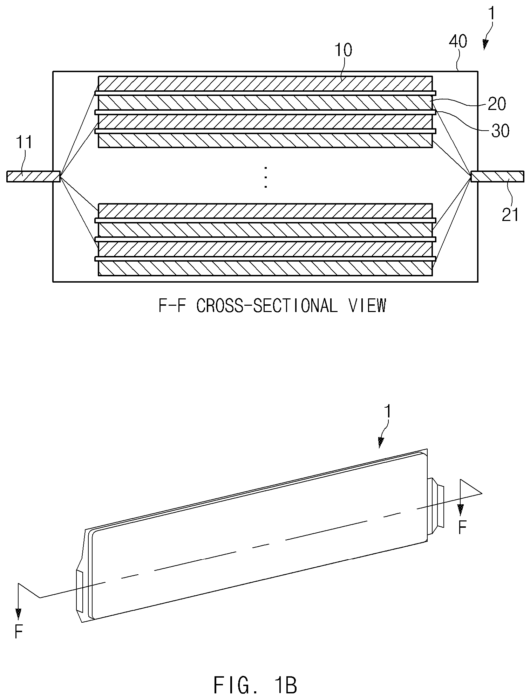

As illustrated in FIG. 1B, which illustrates an internal cross-sectional view of the stack type secondary battery, the number of stacking of negative electrodes 20, separators 30, and positive electrodes 10 is adjusted to easily increase in capacity.

Furthermore, as the secondary battery is charged and discharged, heat is generated in the secondary battery. The heat not only adversely affects the lifespan and performance of the secondary battery but also causes flames or explosion. In addition, recently, as a large capacity secondary battery mounted on a vehicle, an ESS (energy storage system), and the like has been developed, a heat generation amount of the secondary battery increases.

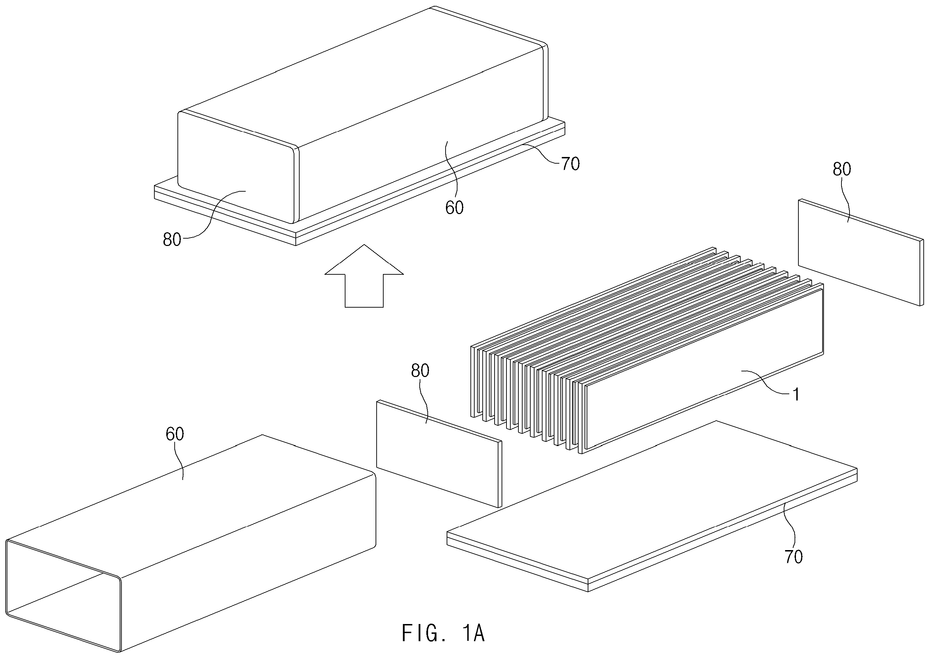

As illustrated in FIG. 1A, which illustrates an exploded view and an assembled state of a secondary battery module, in the secondary battery module, a plurality of secondary batteries 1 are stacked and then mounted in a frame 60. Here, both electrode tabs are electrically connected to each other through a busbar 80, and a cooling plate 70 for suppressing generation of heat in the mounted secondary batteries 1 is attached to one side surface. In the cooling plate 70, a method in which cooling water is introduced and discharged to be heat-exchanged or a method in which a plurality of cooling fins are formed is typically applied.

In the secondary battery module configured as described above, since the cooling plate 70 is attached to only one side surface, a thermal deviation inevitably occurs in the electrode assembly within each of the secondary batteries. Since the temperature deviation adversely affects performance and lifespan of each of the secondary batteries within the secondary battery module, it is necessary to solve the temperature deviation. US2017/365829A and US2016/043370A1 disclose electrode assemblies with a separator provided with a heat transfer layer.

### DISCLOSURE OF THE INVENTION

### TECHNICAL PROBLEM

Therefore, a main object of the present invention is to provide an electrode assembly for a secondary battery mounted in the secondary battery module, in which a temperature deviation therein is minimized.

### TECHNICAL SOLUTION

According to the present invention for achieving the above object, an electrode assembly is defined in the appended set of claims, the electrode assembly in which positive electrodes, separators, and negative electrodes are repeatedly stacked, and a positive electrode tab, through which the positive electrodes are connected to each other, and a negative electrode tab, through which the negative electrodes are connected to each other, are provided, comprises: a heat transfer layer made of a material having thermal conductivity greater than that of the separator and stacked between the positive electrode and the separator or between the negative electrode and the separator to disperse heat generated at a relatively high temperature point to a relatively low temperature point.

The heat transfer layer may be made of a material containing graphite.

The heat transfer layer has an area less than that of the separator and be stacked so as not to protrude from the separator. Here, the negative electrode may have an area equal to or greater than that of the positive electrode, and the heat transfer layer may have an area equal to or greater than that of the negative electrode.

The heat transfer layer is provided with a plurality of punched holes through which ions passes, and the punched holes may be disposed to be regularly arranged in the heat transfer layer.

In addition, the heat transfer layer may be stacked on each of both sides with the separator therebetween in the one or more separators, and the heat transfer layer may be stacked to contact only one side surface of the separator in the one or more separators.

Furthermore, at least two or more heat transfer layers may be provided, and one heat transfer layer may have a thickness greater than that of the other heat transfer layer.

In addition, the separator may be provided in a state in which a heat transfer material is applied on a surface of the separator so that the heat transfer material forms the heat transfer layer in the electrode assembly. In addition, the heat transfer layer may be provided in the form of a plate having a size capable of being stacked between the positive electrode and the separator or between the negative electrode and the separator and is additionally stacked together when the positive electrode, the separator, and the negative electrode are stacked.

The positive electrode tab and the negative electrode tab may be disposed to protrude in directions opposite to each other.

In addition, the present invention is additionally provided with a secondary battery in which the electrode assembly having the above technical features is embedded in a pouch.

### ADVANTAGEOUS EFFECTS

The present invention having the configuration as described above may disperse the heat generated at the relatively high temperature point to the relatively low temperature point to reduce the temperature deviation within the electrode assembly. Therefore, since the factors that adversely affect the charging and discharging performance and the lifespan are removed, the reliability of the product may be improved.

The heat transfer layer is provided with the plurality of punched holes through which the ions pass so as not to interfere with the ion and electron transfer, and the arrangement of the punched holes may vary according to the specifications of the electrode assembly.

Since the heat transfer layer is stacked so that the heat transfer layers are stacked on each of both sides with the separator therebetween or stacked to contact only one side surface in one or more separators, the above-described configurations may be selected in consideration of the heat dispersion effect and the increase in thickness of the electrode assembly.

Furthermore, since any one heat transfer layer has a thickness greater than that of the other heat transfer layer, the heat dispersion effect at the specific location may be more improved.

### BRIEF DESCRIPTION OF THE DRAWINGS

FIG. 1a is an exploded view of a secondary battery module and a perspective view illustrating an assembled state of the secondary battery module.
FIG. 1b is a perspective view of a secondary battery mounted in FIG. 1a and a cross-sectional view taken along line F-F.
FIG. 2 is a cross-sectional view illustrating an inner configuration of the secondary battery according to the present invention.
FIG. 3 is a plan view illustrating a state in which a heat transfer layer is stacked on one surface of a separator according to a first embodiment of the present invention.
FIG. 4a is a plan view of a heat transfer layer according to a second embodiment of the present invention.
FIG. 4b is a plan view of a heat transfer layer according to a third embodiment of the present invention.
FIG. 4c is a plan view of a heat transfer layer according to a fourth embodiment of the present invention.
FIG. 5 is a cross-sectional view illustrating an inner configuration of a secondary battery in which a heat transfer layer is stacked according to a fifth embodiment of the present invention.
FIG. 6a is a perspective view of a secondary battery in which a heat transfer layer is not provided, i.e., a perspective view illustrating points A to E listed in Table 1 and a cross-sectional view taken along line G-G (displayed with a relatively dark color at a low temperature).
FIG. 6b is a perspective view of a secondary battery in which a heat transfer layer is additionally stacked, i.e., a perspective view illustrating the points A to E listed in Table 1 and a cross-sectional view taken along line H-H according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly illustrate the present invention, parts that are not related to the description are omitted, and the same or similar components are denoted by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an electrode assembly, in which positive electrodes 10, separators 30, and negative electrodes 20 are repeatedly stacked, and a positive electrode tab 11, through which the positive electrodes 10 are connected to each other, and a negative electrode tab 21, through which the negative electrodes 20 are connected to each other, are provided so as to be embedded in a pouch 40.

An object of the present invention is to prevent performance from being deteriorated due to heat. That is, a main point of the present invention is to improve heat dissipation performance and minimize a thermal deviation when cooling is performed by a cooling means at one side in a state in which a plurality of secondary batteries 100 are stacked.

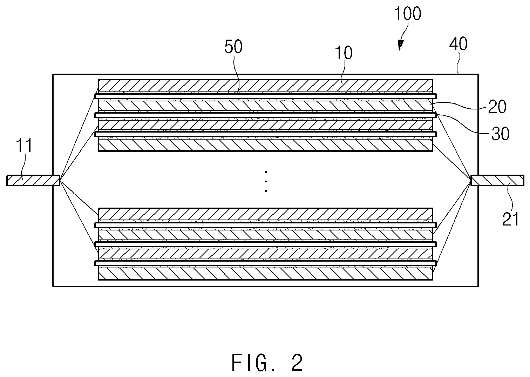

Thus, as illustrated in FIG. 2, which illustrates an inner configuration of the secondary battery according to the present invention, the electrode assembly according to the present invention comprises a heat transfer layer 50 made of a material having thermal conductivity greater than that of the separator 30 and stacked between the positive electrode 10 and the separator 30 or between the negative electrode 20 and the separator 30 to disperse heat generated at a relatively high temperature point to a relatively low temperature point. In the present invention, the heat transfer layer 50 contains a material having high thermal conductivity such as graphite and is provided with a plurality of punched holes 51 through which electrons and ions pass.

Here, the heat transfer layer 50 has an area less than that of the separator 30 so as not to protrude from the electrode assembly. However, the heat transfer layer 50 may have an area equal to or greater than that of the negative electrode 20 so that an entire heat-exchange area of the negative electrode 20 and the positive electrode 10 is maximized in consideration of the fact that the negative electrode 20 is larger than the positive electrode 10 to prevent the lithium from being extracted due to overcharging when lithium gets out of the positive electrode 10 to move to the negative electrode 20. The heat transfer layer 50 may be stacked on each of both side surfaces with the separator therebetween or stacked to contact only one side surface of the separator 30 in one or more separators.

Also, the punched holes 51 may be disposed to form a constant arrangement in the heat transfer layer 50, i.e., may be variously arranged according to specifications and characteristics of the secondary battery.

Hereinafter, embodiments according to the present invention will be described with reference to the accompanying drawings.

### First Embodiment

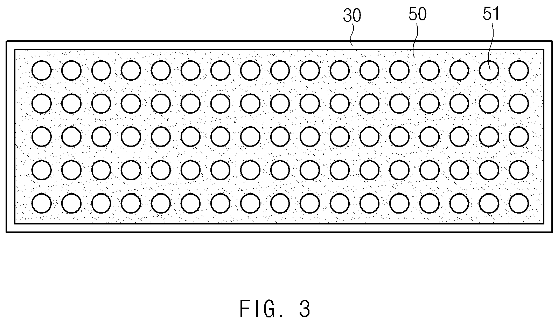

Referring to FIG. 3 which illustrates a state in which a heat transfer layer 50 is stacked on one surface of a separator 30 according to a first embodiment of the present invention, this embodiment is characterized in that the heat transfer layer 50 stacked on the separator 30 is provided with punched holes 51 having the same size are regularly arranged at a constant interval.

That is, in this embodiment, the punched holes 51 are disposed at a constant interval throughout the heat transfer layer 50 so that ions and charges moving between a negative electrode 20 and a positive electrode 10 uniformly passes therethrough. This may be the most basic arrangement structure of the punched holes 50 and be applied together with an arrangement structure to be described later. That is, a plurality of heat transfer layers 50 are provided in an electrode assembly, but the arrangement structure of the punched holes 51 according to the first embodiment may be applied to the most heat transfer layers.

### Second Embodiment

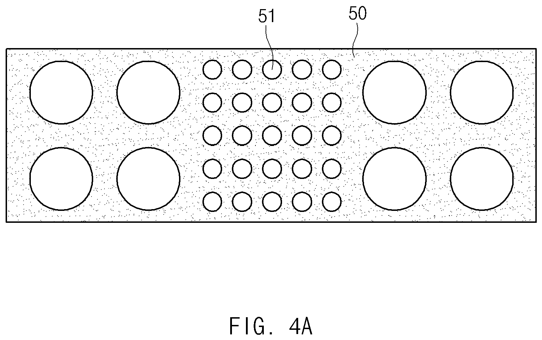

As illustrated in FIG. 4a, which illustrates a plan view of a heat transfer layer 50 according to a second embodiment of the present invention, the heat transfer layer 50 according to this embodiment may have punched holes 51, which increase in size at a specific position. For example, when a passing rate of ions and charges at a specific position is more important than heat transfer, the punched hole 51 may more increase in size so that the passing rate of the ions and charges more increases.

### Third and Fourth Embodiments

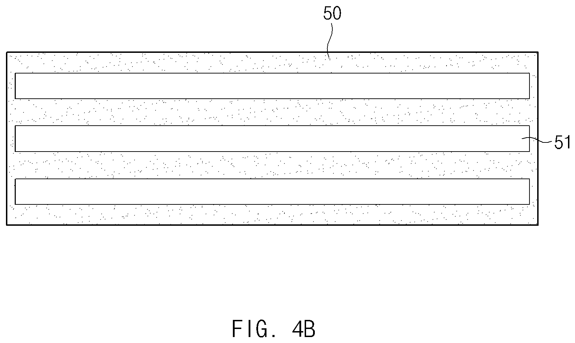

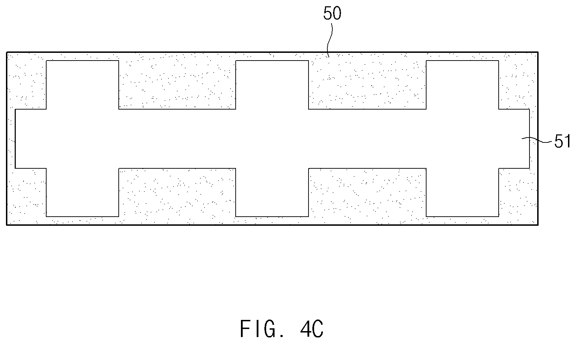

As illustrated in FIGS. 4b and 4c, which illustrate a plan view of a heat transfer layer according to third and fourth embodiments of the present invention, a heat transfer layer 50 according to this embodiment is provided with a punched hole 51 that extends in a longitudinal direction (a left and right direction in the drawings) and/or a width direction (an upward and downward direction in the drawings). As described above, the structure in which the punched hole 51 extends lengthily may further simplify a coating process in a coating method of the heat transfer layer 50 to be described later.

### Fifth Embodiment

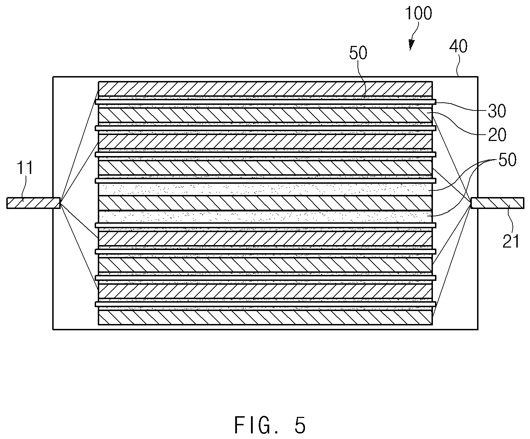

As illustrated in FIG. 5, which illustrates an inner configuration of a secondary battery in which a heat transfer layer 50 is stacked according to a fifth embodiment of the present invention, at least two or more heat transfer layers 50 are disposed in an electrode assembly. Here, one heat transfer layer 50 has a thickness greater than that of the other heat transfer layer 50.

That is, an intermediate position within the electrode assembly may be relatively difficult to dissipate heat rather than the outer side and thus may increase in temperature. Here, the heat transfer layer 50 disposed at the intermediate layer to increase in heat transfer efficiency may have a thickness greater than that of the heat transfer layer 50 disposed at the other layer.

The heat transfer layer 50 having the above-described configuration may be provided in a state applied on a surface of a separator 30 or in the form of a separate plate.

That is, a heat transfer material may be applied on the surface of the separator 30, and after the heat transfer material is cured, the heat transfer material may be stacked together with the separator 30 within the electrode assembly to form the heat transfer layer 50.

Alternatively, the heat transfer layer 50 may be previously manufactured in the form of a plate having a size capable of being stacked between a positive electrode 10 and a separator 30 or between a negative electrode 20 and the separator 30. The previously manufactured heat transfer layer 50 is stacked together when the positive electrode 10, the separator 30, and the negative electrode 20 are stacked.

The method for providing the heat transfer layer 50 may be selected according to the number of punched holes 51 or an arranged state of the punched holes 51. For example, a method, in which the heat transfer layer 50 disposed at a specific position is formed in a coating manner, and the heat transfer layer 50 disposed at another position is stacked in the form of a plate, may be applied.

The electrode assembly according to the present invention is embedded in a pouch 40, and a positive electrode tab 11 and a negative electrode tab 21 are disposed in directions opposite to each other, and an end of each of the tabs protrudes from the pouch 40.

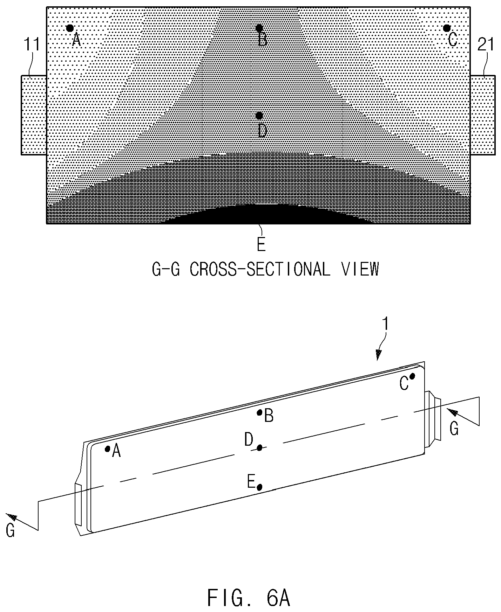

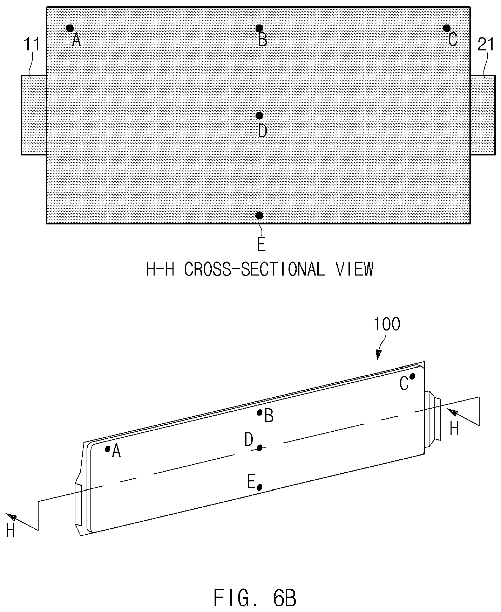

FIG. 6a is a perspective view of a secondary battery in which the heat transfer layer is not provided, i.e., a perspective view illustrating points A to E listed in Table 1 and a cross-sectional view taken along line G-G (displayed with a relatively dark color at a low temperature), and FIG. 6b is a perspective view of a secondary battery in which a heat transfer layer is additionally stacked, i.e., a perspective view illustrating the points A to E listed in Table 1 and a cross-sectional view taken along line H-H according to the present invention (in FIGS. 6a and 6b, although one secondary battery is illustrated, temperature distribution illustrated in the cross-sectional view is shown when secondary batteries are mounted as a secondary battery module as illustrated in FIG. 1a). Table 1 below shows a temperature difference between when the heat transfer layer is not stacked and when the heat transfer layer is stacked at five points illustrated in FIGS. 6a and 6b.

**[Table 1]**

| | Point A | Point B | Point C | Point D | Point E | Maximum temperature deviation |
|---|---|---|---|---|---|---|
| Non-stack of heat transfer layer (FIG. 6a) | 39.5°C | 36.6°C | 39.1°C | 35.1°C | 31.3°C | 8.2°C |
| Stack of heat transfer layer (FIG. 6b) | 33.3°C | 33.0°C | 33.2°C | 32.8°C | 32.5°C | 0.8°C |

| | | | | | | |
|---|---|---|---|---|---|---|
| ** Experimental conditions - cell capacity: 78 Ah, current load: 100A 10 sec pulse, initial status of charge: 50%, initial temperature: 25°C, coolant temperature: 22°C. | | | | | | |

As seen from data in Table 1, when the heat transfer layer 50 is provided in an electrode assembly, it may be confirmed that the temperature deviation decreases in an entire region of the secondary battery. That is, when the heat transfer layer 50 is not provided, if heat is generated, cooling is easily performed in the vicinity of a cooling plate, but heat dissipation is difficult at a point that is relatively far from the cooling plate, resulting in a relatively high temperature. Also, here, the heat dispersion is not achieved to cause the heat deviation. However, when the heat transfer layer 50 is added according to the present invention, it may be confirmed that heat generated at a relatively high temperature point is dispersed to a relatively low temperature point, and thus, a heat exposure area to the outside increases to reduce the overall temperature as well as the temperature deviation.

Therefore, since the structure according to the present invention reduces the temperature deviation and improves the cooling efficiency, the charging/discharging performance and the reliability of the product may be improved.

The heat transfer layer 50 may be provided with the plurality of punched holes 51 through which the ions pass so as not to interfere with the ion and electron transfer, and the arrangement of the punched holes may vary according to the specifications of the electrode assembly.

Since the heat transfer layer 50 is stacked so that the heat transfer layers 50 are stacked on each of both sides with the separator 30 therebetween or stacked to contact only one side surface in one or more separators 30, the above-described configurations may be selected in consideration of the heat dispersion effect and the increase in thickness of the electrode assembly.

Furthermore, since any one heat transfer layer 50 has a thickness greater than that of the other heat transfer layer 50, the heat dispersion effect at the specific location may be more improved.

While the embodiments of the present invention have been described with reference to the specific embodiments, it will be apparent to those skilled in the art that various changes and modifications may be made without departing from the scope of the invention as defined in the following claims.

## Claims

1. An electrode assembly in which positive electrodes (10), separators (30), and negative electrodes (20) are repeatedly stacked, and a positive electrode tab (11), through which the positive electrodes are connected to each other, and a negative electrode tab (21), through which the negative electrodes are connected to each other, are provided, the electrode assembly comprising:
a heat transfer layer (50) made of a material having thermal conductivity greater than that of the separator (30) and stacked between the positive electrode (10) and the separator (30) or between the negative electrode (20) and the separator (30) to disperse heat generated at a relatively high temperature point to a relatively low temperature point,
wherein the heat transfer layer (50) is provided with a plurality of punched holes through which ions pass, and
the heat transfer layer (50) has an area less than that of the separator (30) and is stacked so as not to protrude from the separator.

2. The electrode assembly of claim 1, wherein the heat transfer layer (50) is made of a material containing graphite.

3. The electrode assembly of claim 1, wherein the negative electrode (20) has an area equal to or greater than that of the positive electrode (10), and the heat transfer layer (50) has an area equal to or greater than that of the negative electrode (20).

4. The electrode assembly of claim 1, wherein the punched holes (51) are disposed to be regularly arranged in the heat transfer layer (50).

5. The electrode assembly of claim 1, wherein the heat transfer layer (50) is stacked on each of both sides with the separator (30) therebetween in the one or more separators.

6. The electrode assembly of claim 1, wherein the heat transfer layer (50) is stacked to contact only one side surface of the separator (30) in the one or more separators.

7. The electrode assembly of any one of claims 1 to 6, wherein at least two or more heat transfer layers (50) are provided, and one heat transfer layer has a thickness greater than that of the other heat transfer layer.

8. The electrode assembly of any one of claims 1 to 6, wherein the separator (30) is provided in a state in which a heat transfer material is applied on a surface of the separator (30) so that the heat transfer material forms the heat transfer layer (50) in the electrode assembly.

9. The electrode assembly of any one of claims 1 to 6, wherein the heat transfer layer (50) is provided in the form of a plate having a size capable of being stacked between the positive electrode (10) and the separator (30) or between the negative electrode (20) and the separator (30) and is additionally stacked together when the positive electrode (10), the separator (30), and the negative electrode (20) are stacked.

10. The electrode assembly of any one of claims 1 to 6, wherein the positive electrode tab (11) and the negative electrode tab (21) are disposed to protrude in directions opposite to each other.

11. A secondary battery in which the electrode assembly of any one of claims 1 to 6 is embedded in a pouch.

## Patentansprüche

1. Elektrodenanordnung, in der positive Elektroden (10), Separatoren (30) und negative Elektroden (20) wiederholt gestapelt sind, und eine positive Elektrodenlasche (11), durch die die positiven Elektroden miteinander verbunden sind, und eine negative Elektrodenlasche (21), durch die die negativen Elektroden miteinander verbunden sind, vorgesehen sind, wobei die Elektrodenanordnung umfasst:
eine Wärmeübertragungsschicht (50), die aus einem Material mit einer Wärmeleitfähigkeit hergestellt ist, die größer ist als die des Separators (30), und die zwischen der positiven Elektrode (10) und dem Separator (30) oder zwischen der negativen Elektrode (20) und dem Separator (30) gestapelt ist, um Wärme, die an einem Punkt mit relativ hoher Temperatur erzeugt wird, zu einem Punkt mit relativ niedriger Temperatur zu zerstreuen,
wobei die Wärmeübertragungsschicht (50) mit einer Vielzahl von gestanzten Löchern versehen ist, durch die Ionen hindurchgehen, und
die Wärmeübertragungsschicht (50) eine Fläche aufweist, die kleiner ist als die des Separators (30), und so gestapelt ist, dass sie nicht über den Separator hinausragt.

2. Elektrodenanordnung nach Anspruch 1, wobei die Wärmeübertragungsschicht (50) aus einem graphithaltigen Material hergestellt ist.

3. Elektrodenanordnung nach Anspruch 1, wobei die negative Elektrode (20) eine Fläche aufweist, die gleich oder größer ist als die der positiven Elektrode (10), und die Wärmeübertragungsschicht (50) eine Fläche aufweist, die gleich oder größer ist als die der negativen Elektrode (20).

4. Elektrodenanordnung nach Anspruch 1, wobei die gestanzten Löcher (51) so angelegt sind, dass sie in der Wärmeübertragungsschicht (50) regelmäßig angeordnet sind.

5. Elektrodenanordnung nach Anspruch 1, wobei die Wärmeübertragungsschicht (50) auf jeder der beiden Seiten mit dem Separator (30) dazwischen in dem einen oder den mehreren Separatoren gestapelt ist.

6. Elektrodenanordnung nach Anspruch 1, bei der die Wärmeübertragungsschicht (50) so gestapelt ist, dass sie nur eine Seitenfläche des Separators (30) in dem einen oder den mehreren Separatoren berührt.

7. Elektrodenanordnung nach einem der Ansprüche 1 bis 6, wobei mindestens zwei oder mehr Wärmeübertragungsschichten (50) vorgesehen sind und eine Wärmeübertragungsschicht eine größere Dicke als die andere Wärmeübertragungsschicht aufweist.

8. Elektrodenanordnung nach einem der Ansprüche 1 bis 6, wobei der Separator (30) in einem Zustand vorgesehen ist, in dem ein Wärmeübertragungsmaterial auf eine Oberfläche des Separators (30) aufgebracht ist, so dass das Wärmeübertragungsmaterial die Wärmeübertragungsschicht (50) in der Elektrodenanordnung bildet.

9. Elektrodenanordnung nach einem der Ansprüche 1 bis 6, wobei die Wärmeübertragungsschicht (50) in Form einer Platte mit einer Größe vorgesehen ist, die zwischen der positiven Elektrode (10) und dem Separator (30) oder zwischen der negativen Elektrode (20) und dem Separator (30) gestapelt werden kann und zusätzlich zusammengestapelt wird, wenn die positive Elektrode (10), der Separator (30) und die negative Elektrode (20) gestapelt werden.

10. Elektrodenanordnung nach einem der Ansprüche 1 bis 6, wobei die positive Elektrodenlasche (11) und die negative Elektrodenlasche (21) so angeordnet sind, dass sie in entgegengesetzte Richtungen vorstehen.

11. Sekundärbatterie, bei der die Elektrodenanordnung nach einem der Ansprüche 1 bis 6 in einen Beutel eingebettet ist.

## Revendications

1. Ensemble d'électrodes dans lequel des électrodes positives (10), des séparateurs (30) et des électrodes négatives (20) sont empilés de façon répétée, et une patte d'électrode positive (11), par l'intermédiaire de laquelle les électrodes positives sont connectées entre elles, et une patte d'électrode négative (21), par l'intermédiaire de laquelle les électrodes négatives sont connectées entre elles, sont fournies, l'ensemble d'électrodes comprenant :
une couche de transfert thermique (50) constituée d'un matériau ayant une conductivité thermique supérieure à celle du séparateur (30) et empilée entre l'électrode positive (10) et le séparateur (30) ou entre l'électrode négative (20) et le séparateur (30) pour disperser de la chaleur générée à un point de température relativement élevé vers un point de température relativement bas,
dans lequel la couche de transfert thermique (50) est dotée d'une pluralité de trous perforés à travers lesquels passent des ions, et
la couche de transfert thermique (50) présente une surface inférieure à celle du séparateur (30) et est empilée de façon à ne pas faire saillie à partir du séparateur.

2. Ensemble d'électrodes selon la revendication 1, dans lequel la couche de transfert thermique (50) est constituée d'un matériau contenant du graphite.

3. Ensemble d'électrodes selon la revendication 1, dans lequel l'électrode négative (20) a une surface supérieure ou égale à celle de l'électrode positive (10), et la couche de transfert thermique (50) a une surface égale ou supérieure à celle de l'électrode négative (20).

4. Ensemble d'électrodes selon la revendication 1, dans lequel les trous perforés (51) sont disposés pour être agencés de manière régulière dans la couche de transfert thermique (50).

5. Ensemble d'électrodes selon la revendication 1, dans lequel la couche de transfert thermique (50) est empilée sur chacun des deux côtés avec le séparateur (30) entre ceux-ci dans les un ou plusieurs séparateurs.

6. Ensemble d'électrodes selon la revendication 1, dans lequel la couche de transfert thermique (50) est empilée pour entrer en contact uniquement avec une surface latérale du séparateur (30) dans les un ou plusieurs séparateurs.

7. Ensemble d'électrodes selon l'une quelconque des revendications 1 à 6, dans lequel au moins deux couches de transfert thermique (50) ou plus sont fournies, et une couche de transfert thermique a une épaisseur supérieure à celle de l'autre couche de transfert thermique.

8. Ensemble d'électrodes selon l'une quelconque des revendications 1 à 6, dans lequel le séparateur (30) est fourni dans un état dans lequel un matériau de transfert thermique est appliqué sur une surface du séparateur (30) de sorte que le matériau de transfert thermique forme la couche de transfert thermique (50) dans l'ensemble d'électrodes.

9. Ensemble d'électrodes selon l'une quelconque des revendications 1 à 6, dans lequel la couche de transfert thermique (50) est fournie sous la forme d'une plaque ayant une taille pouvant être empilée entre l'électrode positive (10) et le séparateur (30) ou entre l'électrode négative (20) et le séparateur (30) et est en outre empilée en même temps lorsque l'électrode positive (10), le séparateur (30) et l'électrode négative (20) sont empilés.

10. Ensemble d'électrodes selon l'une quelconque des revendications 1 à 6, dans lequel la patte d'électrode positive (11) et la patte d'électrode négative (21) sont disposées pour faire saillie dans des directions opposées l'une à l'autre.

11. Batterie secondaire dans laquelle l'ensemble d'électrodes selon l'une quelconque des revendications 1 à 6 est intégré à une poche.
